(19) **Europäisches Patentamt / European Patent Office / Office européen des brevets**

(11) **EP 3 346 306 B1**

(12) **FASCICULE DE BREVET EUROPEEN**

(45) Date de publication et mention de la délivrance du brevet:
**15.01.2025 Bulletin 2025/03**

(21) Numéro de dépôt: **17208225.7**

(22) Date de dépôt: **18.12.2017**

(51) Classification Internationale des Brevets (IPC):
**G02B 6/42** *(2006.01)*

(52) Classification Coopérative des Brevets (CPC):
**G02B 6/4201; F21S 43/14; F21S 43/195; F21S 43/237; F21S 43/247; F21S 43/27; G02B 6/4292**

(54) **DISPOSITIF DE RACCORDEMENT AMOVIBLE POUR UN GUIDE DE LUMIÈRE ET APPLICATION DANS UN VÉHICULE AUTOMOBILE, MODULE À TRANSMISSION OPTIQUE POURVU DU DISPOSITIF**

LÖSBARE ANSCHLUSSVORRICHTUNG FÜR EINEN LICHTWELLENLEITER, UND ANWENDUNG IN EINEM KRAFTFAHRZEUG, OPTISCHES ÜBERTRAGUNGSMODUL, DAS MIT EINER SOLCHEN VORRICHTUNG AUSGESTATTET IST

DETACHABLE CONNECTION DEVICE FOR A LIGHT GUIDE AND APPLICATION IN A MOTOR VEHICLE, OPTICAL TRANSMISSION MODULE FITTED WITH THE DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.01.2017 FR 1750062**

(43) Date de publication de la demande:
**11.07.2018 Bulletin 2018/28**

(73) Titulaire: **Valeo Vision**
**93012 Bobigny Cedex (FR)**

(72) Inventeurs:
• **LETOUMELIN, Rémi**
**93012 BOBIGNY Cedex (FR)**

• **RASOLDIER, Nirina**
**94230 CACHAN (FR)**

(74) Mandataire: **Valeo Visibility**
**Service Propriété Industrielle**
**c/o Valeo Vision**
**34, rue Saint André**
**93012 Bobigny (FR)**

(56) Documents cités:
| | |
|---|---|
| EP-A2- 1 482 340 | EP-A2- 2 378 323 |
| US-A- 4 779 950 | US-A- 5 982 969 |
| US-A1- 2011 176 326 | US-A1- 2013 188 912 |

**Description**

La présente invention concerne le domaine du couplage optique entre une source lumineuse et l'entrée d'un guide de lumière. L'invention concerne un dispositif de raccordement amovible pour un guide de lumière et une utilisation de ce dispositif dans un véhicule automobile.

On connaît, par exemple par le document US 5732176, des solutions d'insertion dans une douille d'une extrémité d'accouplement d'un guide de lumière. La douille fait partie d'un réceptacle contenant la source lumineuse. Le câble conducteur de lumière se termine par un embout de connexion pourvu de deux ergots de baïonnette qui s'engagent dans des fentes correspondantes formées dans la douille (comme bien visible en particulier sur les figures 1-3 et 13 de ce document). EP1482340A2 divulgue un module qui a un boîtier avec un port de connexion pour la connexion avec un connecteur de câble de fibre optique externe. Une unité de verrouillage verrouille le boîtier dans une cage lorsque le connecteur est connecté au port de connexion, après que le boîtier a été inséré dans la cage jusqu'à une position prédéfinie. L'unité de verrouillage déverrouille le boîtier de la cage lorsque le connecteur est déconnecté du port de connexion.

La miniaturisation, notamment dans le domaine automobile, pousse à utiliser des guides de lumière étroits et dont la section de l'embout de connexion est de plus en plus réduite, par exemple ne dépassant pas 5 ou 6 mm de largeur maximale. Le montage et le démontage du guide de lumière fragilise ce dernier. Le système de connexion à baïonnette ne donne pas satisfaction car des contraintes de torsion s'appliquent alors sur le guide de lumière, avec un risque de casse élevé. Il est ainsi souvent observé au démontage ou au remontage que le guide de lumière casse, en particulier dans la zone de jonction avec l'embout ou à proximité de cette zone. Ceci est d'autant plus gênant que, dans le domaine automobile comme pour d'autres applications, il est fréquemment demandé de pouvoir monter et démonter au moins cinq fois un guide de lumière sur la douille associée (typiquement pour remplacer la source lumineuse contenue dans le réceptacle).

De plus, le montage en baïonnette, génère un problème d'encombrement dû au volume balayé en rotation par le module.

Il existe donc un besoin pour une solution de montage et démontage d'un guide de lumière qui puisse limiter les contraintes de torsion à exercer pour insérer et fixer l'embout de connexion du guide de lumière, sans pour autant complexifier le système ou nécessiter des outils.

L'invention vise donc à améliorer la situation et propose à cet effet un dispositif de raccordement amovible pour un guide de lumière défini dans la revendication 1.

Comme c'est l'habitude dans ce domaine, on entend ici par « raccordement amovible » le fait que le guide de lumière se monte de façon réversible sans endommagement du réceptacle ou de l'élément de verrouillage ni endommagement du guide de lumière. En particulier, l'élément de verrouillage du dispositif de raccordement amovible peut passer de l'une à l'autre des positions autant de fois qu'il est souhaité, et généralement au moins cinq fois. Ceci est particulièrement utile dans le cas où un opérateur veut vérifier la localisation d'une panne et changer le composant défectueux (défaillance de la source lumineuse par exemple, qui nécessite un remplacement).

Le terme « articulé » est pris ici dans son sens habituel, de sorte que l'élément de verrouillage est mobile avec un déplacement angulaire relatif par rapport au réceptacle via une articulation, typiquement une charnière, ce déplacement étant permis sans qu'il soit nécessaire de déformer l'élément de verrouillage. D'ailleurs, cet élément de verrouillage peut être rigide pour l'essentiel. L'élément de verrouillage peut être conçu et agencé pour tourner de plus de 45°, de préférence de plus de 90°, autour de l'axe (au moins une fois, par exemple pour atteindre la première position).

Grâce à ces dispositions, il est permis de contrôler manuellement la position angulaire de l'élément de verrouillage et d'amener ce dernier dans la deuxième position qui verrouille l'accouplement après avoir inséré le guide de lumière dans la partie de raccordement femelle qui définit la douille. La mise en place peut se faire de façon directe sans frottement ou contact dur dans la douille, le maintien en position résultant du rabattement de l'organe de blocage.

L'élément de verrouillage peut être articulé sur une partie de boîtier du réceptacle afin de permettre un verrouillage du raccordement dans une position finale pliée, après avoir monté le guide dans une position de montage moins pliée de l'élément de verrouillage.

Selon l'invention revendiquée, l'élément de verrouillage est :

- articulé autour d'un axe défini par une charnière de raccordement entre l'élément de verrouillage et le réceptacle ; et
- adapté pour venir buter sur le réceptacle dans ladite première position en ayant une position angulaire prédéfinie dans laquelle l'organe de blocage est davantage éloigné de la cavité que dans la deuxième position.

Selon une particularité, l'organe de blocage peut définir une surface de guidage dans la première position, dans laquelle cet organe de blocage est plus éloigné de la cavité que dans la deuxième position. La surface de guidage est formée extérieurement à la douille par l'organe de blocage, en alignement avec la face interne de cette douille. Ceci permet d'allonger le guidage pour obtenir la position correcte d'insertion du guide de lumière.

Selon une particularité, le réceptacle présente, extérieurement à la partie de raccordement femelle, une butée de contact sur laquelle vient s'appuyer, dans la première position de l'élément de verrouillage, une surface d'indexation portée par ou formée sur l'élément de verrouillage, de façon à limiter en dessous d'un seuil déterminé inférieur à 50°, de préférence inférieur à 30°, une rotation de l'élément de verrouillage autour de l'axe entre ladite première position et ladite deuxième position. Ceci permet de limiter le débattement de l'élément de verrouillage lors des opérations de montage/-démontage, la première position permettant de décaler suffisamment l'organe de blocage pour extraire le guide de lumière, avec en outre un effet favorable de guidage.

Un dispositif de raccordement amovible selon l'invention peut comporter l'une ou plusieurs des caractéristiques suivantes :

- la partie de raccordement femelle présente un périmètre déterminé et, dans la deuxième position, l'élément de verrouillage présente, autour de l'axe central de la partie de raccordement femelle, une extension circonférentielle supérieure à la moitié du périmètre déterminé pour entourer plus d'un tiers de la partie de raccordement femelle, de préférence pour entourer la totalité de la partie de raccordement femelle.
- une portion actionnable du réceptacle est prévue sur le réceptacle pour déclencher le passage de la deuxième position vers la première position de l'élément de verrouillage, la portion actionnable et une charnière définissant l'articulation de l'élément de verrouillage étant réparties de façon diamétralement opposée par rapport à la partie de raccordement femelle.
- la deuxième position est verrouillée mécaniquement par le franchissement par l'élément de verrouillage, dans une première direction allant vers la cavité, d'un relief saillant prévu sur une portion actionnable du réceptacle, le relief saillant étant adapté pour bloquer axialement l'élément de verrouillage dans la deuxième position.

- la portion actionnable du réceptacle comporte ou est définie par une languette élastique de clippage qui s'étend parallèlement à la direction longitudinale et présente le relief saillant sur une face orientée vers la partie de raccordement femelle, ce relief saillant ayant un sommet convexe adapté pour s'engager sur la surface d'indexation, qui est de préférence concave, afin de former la butée de contact radial dans la première position et limiter la rotation de l'élément de verrouillage.
- une charnière permettant de faire tourner l'élément de verrouillage est à effet de rappel élastique afin de solliciter automatiquement l'élément de verrouillage au moins vers la première position, depuis la deuxième position en réponse à une action de déverrouillage exercée sur la portion actionnable ; grâce à cette disposition, le relief saillant peut être franchi par l'élément de verrouillage dans une deuxième direction opposée à la première direction, pour passer de la deuxième position à la première position, par exemple dès qu'un opérateur pousse la languette élastique afin de désengager le relief saillant d'un rebord ou bord de prise défini par l'élément de verrouillage.

- dans une position fléchie de la languette élastique, obtenue par une action de poussée sur une extrémité d'actionnement ou autre zone adaptée d'appui de cette languette pour déverrouiller la deuxième position :

  - soit le sommet convexe du relief saillant est décalé par rapport à la trajectoire de la surface d'indexation lors du rappel élastique de l'élément de verrouillage par la charnière, de façon à ne pas limiter le mouvement de rotation de l'élément de verrouillage ; cette option peut être préférée pour éviter tout appui radial de l'élément de verrouillage contre le guide de lumière pouvant gêner le désengagement de ce guide hors de la partie de raccordement ;
  - soit le sommet convexe du relief saillant est sur la trajectoire de la surface d'indexation lors du rappel élastique de l'élément de verrouillage par la charnière, de façon à limiter le mouvement de rotation de l'élément de verrouillage et obtenir la première position ; cette dernière option peut être préférée pour éviter tout appui radial de l'élément de verrouillage contre le guide de lumière pouvant gêner le désengagement de ce guide hors de la partie de raccordement.

- un déverrouillage de la deuxième position est actionnable par une portion d'actionnement située entièrement en dehors du volume intérieur défini par le réceptacle, et entièrement en dehors du logement d'accouplement au moins dans la première position.
- la partie de raccordement femelle se présente sous la forme d'une douille, s'étendant longitudinalement autour de l'axe central qui traverse l'ouverture, et qui fait saillie vers l'extérieur par rapport à une face externe du réceptacle perpendiculaire à l'axe central.
- l'organe de blocage est en vis-à-vis de l'ouverture dans la première position et inséré au travers de l'ouverture dans la deuxième position.
- le logement d'accouplement présente une section de passage déterminée, définie du côté de l'ouverture, sachant que l'organe de blocage réduit la section de passage déterminée dans la deuxième position, de sorte que le guide de lumière puisse être sélectivement inséré dans la première position mais pas dans une position davantage pliée de l'élément de verrouillage correspondant sensiblement à la deuxième position.

- l'élément de verrouillage présente en outre des moyens de solidarisation amovible pour entrer en relation bloquée sur le réceptacle de façon amovible dans ladite deuxième position, les moyens de solidarisation amovible s'engageant sur le réceptacle à distance du logement d'accouplement.
- les moyens de solidarisation amovible comprennent une surface de butée orientée à l'opposé de la cavité du réceptacle dans la deuxième position de l'élément de verrouillage,
- le réceptacle comporte une languette élastique de clippage s'engageant contre la surface de butée dans la deuxième position de l'élément de verrouillage.
- l'élément de verrouillage s'étend de façon annulaire autour de la partie de raccordement femelle aussi bien dans la première position que dans la deuxième position.
- la partie de raccordement femelle présente une fente longitudinale parallèle à un axe central de la partie de raccordement femelle, destinée à recevoir un relief saillant formé sur le guide de lumière, la fente longitudinale présentant un fond proximal par rapport à la cavité et deux bords opposés qui s'étendent depuis le fond jusqu'à un débouché axial de la fente,
- l'organe de blocage, qui forme une projection en saillie radialement vers l'intérieur depuis une face interne de l'élément de verrouillage, est aligné longitudinalement avec la fente dans la deuxième position en faisant face au fond de la fente, l'organe de blocage étant escamoté du côté de l'un des deux bords opposés dans la première position.
- un élément électroluminescent est placé dans la cavité du réceptacle selon l'invention revendiquée pour former tout ou partie de la source lumineuse et ayant une direction générale d'éclairage parallèle ou confondue avec un axe longitudinal de la partie de raccordement femelle.
- l'élément de verrouillage et le réceptacle sont reliés entre eux par une charnière élastique intégrée dans une pièce plastique, l'élément de verrouillage et tout ou partie du réceptacle appartenant à ladite pièce plastique.
- l'élément de verrouillage est conçu séparément du réceptacle, l'articulation pouvant être obtenue dans un état monté/assemblé de l'élément de verrouillage sur le réceptacle.
- l'élément de verrouillage s'étend extérieurement au réceptacle.
- la partie de raccordement femelle s'étend longitudinalement autour d'un axe central et comprend une portion de guidage longitudinal pour le guide de lumière, ainsi que des premiers moyens d'indexation en rotation formés dans la portion de guidage longitudinal, adaptés pour coopérer avec un relief formé sur le guide de lumière.
- l'organe de blocage définit un deuxième moyen d'indexation en rotation, qui est placé en regard de l'ouverture et longitudinalement décalé vers l'extérieur par rapport à l'ouverture dans ladite première position.

Un autre objet de l'invention est de proposer un module à transmission optique de conception robuste et qui n'engendre pas de casse du guide après plusieurs cycles de montage/démontage.

A cet effet, il est proposé un module à transmission optique, comprenant le dispositif de raccordement amovible selon l'invention et un guide de lumière réalisé au moins en partie sous la forme de tige conductrice de lumière pourvue d'une extrémité d'accouplement, une position connectée de l'extrémité d'accouplement dans le logement d'accouplement étant verrouillée par l'organe de blocage dans la deuxième position et déverrouillée dans la première position pour laquelle l'organe de blocage est davantage éloigné de la cavité que dans ladite deuxième position.

Il est aussi proposé selon l'invention de monter le dispositif de raccordement amovible dans un véhicule automobile et d'utiliser ce dispositif pour recevoir un guide optique du type pourvu d'un relief saillant formé latéralement sur une extrémité d'accouplement du guide optique, l'organe de blocage de l'élément de verrouillage étant rabattu sur le relief saillant dans la deuxième position de l'élément de verrouillage.

Il est permis de réaliser le raccordement de l'extrémité de connexion du guide de lumière sans pièce ou couche métallique ce qui facilite la réduction de poids et permet des réalisations en plastique moins coûteuses.

D'autres caractéristiques et avantages de l'invention apparaîtront au cours de la description suivante de plusieurs de ses modes de réalisation, donnés à titre d'exemples non limitatifs, en regard des dessins joints dans lesquels :

- la figure 1 est une vue à travers une coupe d'un dispositif de raccordement amovible conforme à l'invention ;
- les figures 2A et 2B sont respectivement des vues de côté et en coupe d'un module à transmission optique conforme à l'invention, montrant chacune une première position prise par un élément mobile articulé du dispositif de la figure 1 avant d'engager le guide de lumière associé ;
- les figures 2C et 2D sont des détails respectifs illustrant un mode de clippage en deux temps par utilisation d'une languette élastique actionnable ;
- la figure 3 est un détail vu en coupe d'un module à transmission optique, montrant une configuration pré-clippée de l'élément mobile comme sur les figures 2A et 2B, et la réception de l'extrémité du guide de lumière dans la partie de raccordement femelle ;
- la figure 4 est une vue de dessus du module à transmission optique de la figure 3 ;
- la figure 5 est une vue du module à transmission optique de la figure 3 selon une coupe perpendiculaire à celle de la figure 3, montrant une deuxième position prise par l'élément mobile articulé du dispositif de la figure 1 après l'engagement du guide de lumière afin de verrouiller l'accouplement ;

- la figure 6 est une vue de dessus du module à transmission optique de la figure 5 ;

- les figures 7A et 7B sont respectivement des vues de côté et en coupe du module à transmission optique comme dans les figures 2A et 2B, montrant chacune la deuxième position prise par l'élément mobile articulé du dispositif pour verrouiller la connexion du guide de lumière.

Sur les différentes figures, les mêmes références désignent des éléments identiques ou similaires.

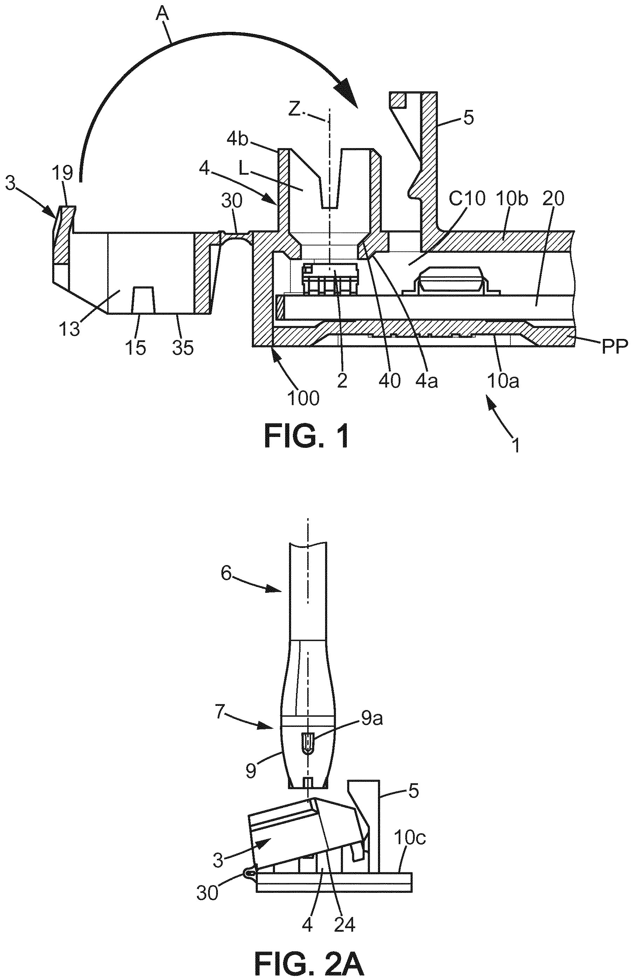

La figure 1 représente un mode de réalisation préféré d'un dispositif 1 de raccordement amovible permettant de loger une source de lumière 2. Le dispositif 1 présente un réceptacle 10, un élément de verrouillage 3 articulé par rapport au réceptacle 10, une partie de raccordement femelle 4 et une languette élastique 5 de clippage. Le réceptacle 10 peut se décomposer optionnellement en une partie de fond 10a et en une partie de couvercle 10b, raccordées entre elles par une charnière et qui s'assemblent l'une à l'autre pour définir une cavité C10. La source lumineuse 2 est placée et maintenue fixement dans la cavité C10. A titre d'exemple non limitatif, une diode électroluminescente (LED) montée sur une plaque 20 à circuit imprimé peut définir une telle source lumineuse 2. Le recours à un élément électroluminescent dans la cavité C10 permet de minimiser l'encombrement du réceptacle 10, qui présente ici un format général aplati à l'exception de la partie de raccordement 4 et la languette élastique 5.

La partie de raccordement femelle 4 et la languette élastique 5 sont formées intégralement avec le réceptacle 10 et peuvent faire saillie suivant une même direction depuis une face externe 10c sensiblement plane du réceptacle 10. Plus généralement, la partie de raccordement femelle 4 et la languette élastique 5 peuvent s'étendre depuis une partie de boîtier 100 qui permet de définir la cavité C10 et de recevoir la source lumineuse 2. La direction générale d'éclairage de cette source lumineuse 2 est parallèle ou confondue avec un axe central Z de la partie de raccordement femelle 4.

L'élément de verrouillage 3, à la différence de la partie de raccordement 4, est articulé par rapport à la partie de boîtier 100 du réceptacle 10. La partie de raccordement femelle 4 s'étend ici autour de l'axe central Z entre une extrémité annulaire 4a adjacente à la cavité C10 et une extrémité libre 4b. Un passage, délimité par l'extrémité annulaire 4a, est réalisé dans le réceptacle 10, sensiblement dans le plan de la paroi qui définit la face externe 10c. C'est par ce passage que le logement d'accouplement L, défini par la partie de raccordement 4, communique avec la cavité C10.

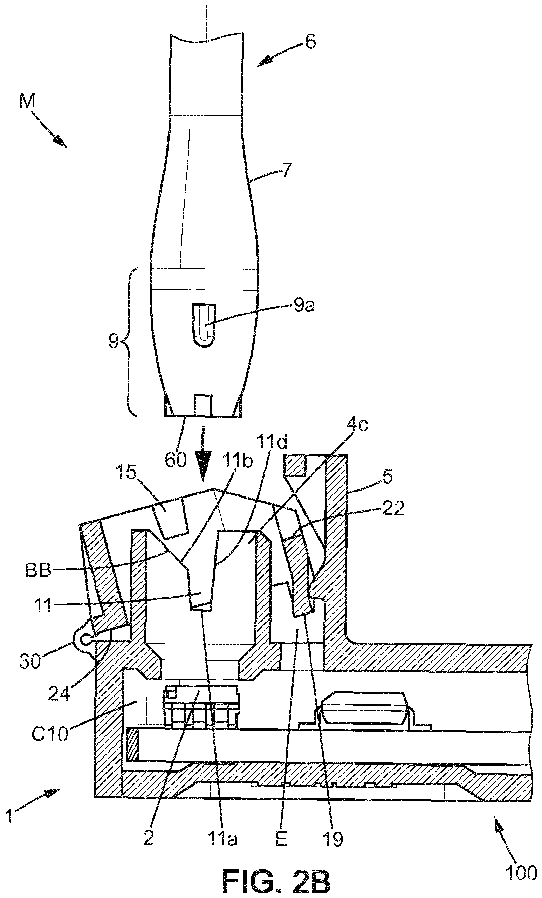

En référence aux figures 1 et 2B, à l'opposé de l'extrémité annulaire 4a, la partie de raccordement femelle 4 présente une ouverture d'accès 4c délimitée par l'extrémité libre 4b. Cette ouverture d'accès 4c du côté opposé à la cavité C10 permet la réception et l'extraction d'un guide de lumière 7 dans le logement d'accouplement L, respectivement par insertion et extraction d'une extrémité d'un guide de lumière 7 au travers de l'ouverture d'accès 4c.

L'élément de verrouillage 3 se présente ici sous la forme d'une bague entièrement ou partiellement annulaire, articulée par une charnière 30 située à proximité de la jonction entre la partie de raccordement femelle 4 et la partie de boîtier 100. La position initiale, de conception, de l'élément de verrouillage 3 peut être entièrement décalée sur un côté par rapport à la partie de raccordement 4, comme visible sur la figure 1. L'élément de verrouillage 3 s'étend entre une extrémité 35 de pré-guidage et une extrémité de base, ici annulaire, prévue pour s'appuyer sur la face externe 10c dans une configuration entièrement pliée de la charnière 30.

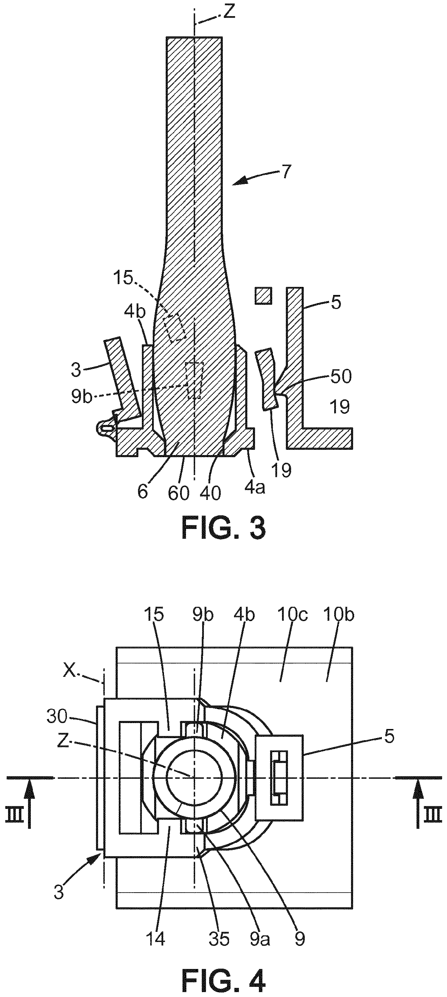

En référence à la figure 3, l'extrémité annulaire 4a de la partie de raccordement femelle 4 définit une portée 40 cylindrique ou d'une autre forme annulaire pour définir un contact annulaire de préférence étanche avec un embout de connexion 6 d'un guide de lumière 7. Bien que la figure 3 montre un contact annulaire radial, ce contact peut aussi être axial. L'embout de connexion 6 présente du côté d'une face frontale une ouverture définissant l'entrée 60 du guide de lumière 7. Une extrémité d'accouplement 9, formée par cet embout 6, constitue la partie mâle insérable du guide de lumière 7. L'extrémité d'accouplement 9 est ainsi insérée et reçue dans la partie de raccordement femelle 4.

Le guide de lumière 7 peut optionnellement se combiner avec des éléments optiques ou faire partie d'une pièce optique. Notamment, le guide de lumière 7 peut présenter une structure différente de celle allongée illustrée sur les figures 2A-2B et 3.

Dans une configuration repliée différente de sa configuration entièrement pliée, visible sur les figures 2A à 4, l'élément de verrouillage 3 peut entourer tout ou partie de la partie de raccordement femelle 4. L'extrémité 35 de pré-guidage peut guider l'insertion du guide de lumière 7, par exemple par une forme globalement circulaire de cette extrémité 35 et par la présence de deux organes de blocage 14, 15 qui limitent les possibilités de rotation du guide de lumière 7 autour de l'axe central Z ou d'inclinaison par rapport à cet axe Z. Pour cela, l'extrémité 35 de pré-guidage peut s'étendre en avant de l'ouverture 4c et à une courte distance, typiquement inférieure à 5 ou 10 mm, de l'extrémité libre 4b de la partie de raccordement femelle 4. L'allongement du guidage permet d'éviter toute collision entre le guide de lumière 7 et la partie de raccordement femelle 4 pendant l'insertion.

Dans une forme de réalisation avantageuse, l'extrémité d'accouplement 9 du guide de lumière 7 présente deux ergots 9a, 9b radialement saillants vers l'extérieur. Cette configuration peut être réalisée en minimisant le périmètre externe maximum de l'embout de connexion 6. A titre d'exemple, ce périmètre externe maximum, qui coïncide avec la position des ergots 9a, 9b, peut être inférieur à 15 ou 20 mm, tandis que le périmètre externe minimum du guide de lumière 7 peut être inférieur à 10 ou 15 mm. Dans une variante, le nombre d'ergots, reliefs analogues ou creux formés dans une partie renflée de l'extrémité d'accouplement 9 n'est pas forcément égal à deux, et peut être seulement de un ou supérieur à deux.

Plus généralement, on comprend que l'extrémité d'accouplement 9 présente une section non constante, avec au moins un relief. La partie de raccordement 4, de forme générale tubulaire, est conçue avec une complémentarité de forme dans sa face interne pour coopérer avec l'extrémité d'accouplement 9. Selon un mode de réalisation préféré de l'invention, la partie de raccordement femelle 4 définit un système détrompeur anti-rotation permettant, par indexation du guide de lumière 7 en rotation, de positionner correctement les ergots 9a, 9b ou autre relief ou forme fonctionnellement similaire face une empreinte complémentaire prévue dans la partie de raccordement 4.

Ainsi, un opérateur ne peut pas se tromper dans la catégorie de guide de lumière, compte tenu de la complémentarité de forme requise, et il peut se rendre compte de l'inadaptation avant même de pouvoir engager de façon serrée l'extrémité d'accouplement 9. De plus, pour le montage ou le démontage d'un guide de lumière 7 adapté, il n'y a aucune nécessité d'exercer des contraintes importantes de torsion sur ce guide du fait que le guide de lumière 7 est engagé dans la partie de raccordement femelle 4 seulement par translation linéaire en direction de la cavité C10.

Sur les figures 2A-2B et 3, on peut voir que la partie de raccordement femelle 4 ne permet pas une connexion de type baïonnette, et inclut au contraire un relief complémentaire qui n'implique pas de changement brusque dans la position angulaire de l'extrémité d'accouplement 9. Ici, comme bien visible sur les figures 1 et 2B, il est prévu deux fentes 11 ou deux reliefs creux (évidements) pour recevoir les deux ergots 9a, 9b. Chaque fente 11 constitue ici une fente longitudinale formée dans la paroi latérale de la partie de raccordement femelle 4, en s'étendant parallèlement à l'axe central Z. Le relief saillant, ici l'ergot 9a ou 9b est reçu dans la fente 11, de préférence jusqu'à buter contre un fond 11a de la fente 11 qui est proximal par rapport à la cavité C10. Chaque ergot 9a, 9b est guidé entre les deux bords opposés de la fente 11 qui s'étendent depuis le fond 11ajusqu'à un débouché axial 11b de la fente 11.

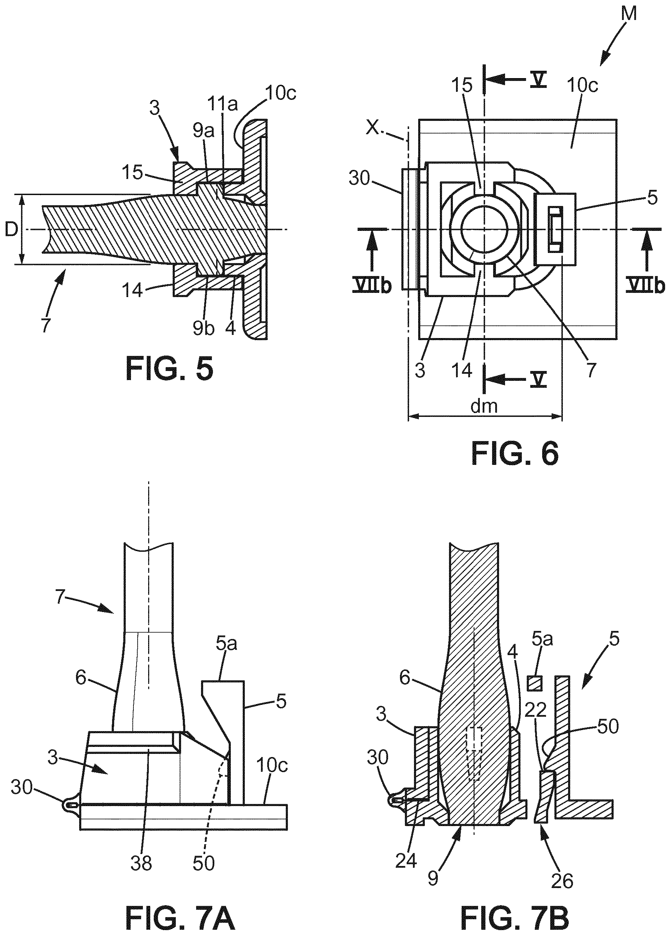

L'élément de verrouillage 3 peut fermer le débouché axial 11b par l'intermédiaire d'au moins un organe de blocage 14, 15, qui forme ici une projection en saillie radialement vers l'intérieur depuis une face interne 13 de l'élément de verrouillage 3. La position de fermeture du débouché axial 11b peut correspondre, comme visible sur les figures 5 et 6, à une position du ou des organes de blocage 14, 15 qui est rapprochée au maximum par rapport à la cavité C10.

Sur les figures 5 et 6, on peut voir que deux organes de blocage 14, 15, positionnés de façon opposée, font saillie vers l'intérieur, l'un vers l'autre, suivant une direction parallèle à l'axe X de la charnière 30. La largeur de ces organes de blocage 14, 15 peut être sensiblement la même que la largeur des fentes 11 et des ergots 9a, 9b. L'extension radiale de ces projections 14, 15 est typiquement identique à celle des ergots 9a, 9b, tandis que la hauteur de ces organes de blocage 14, 15 peut être au moins égale à cette extension radiale ou à la largeur, afin d'optimiser le guidage allongé permis dans une première position de l'élément de verrouillage 3.

L'agencement de verrouillage est compact, avec ici une distance maximale dm entre l'axe X de la charnière 30 et la languette élastique 5, mesurée perpendiculairement aux axes X et Z, qui vérifie la relation suivante :

$$D/dm \geq 1/3,$$

et de préférence $D/dm \geq 1/2$
où D désigne le diamètre interne minimal de la partie de raccordement 4, mesuré à ou près de l'extrémité libre 4b de la partie de raccordement 4.

Autrement dit, l'encombrement généré autour de la partie de raccordement 4 peut rester réduit, sachant que le diamètre interne D est généralement inférieur ou égal à 5 mm.

En référence aux figures 1 à 4, l'élément de verrouillage 3 est articulé par rapport au réceptacle 10 par l'intermédiaire d'une charnière 30, ici une charnière plastique. Une seule pièce plastique PP formée par moulage peut réunir les éléments 3, 4, 5 et 10. Dans ce cas, la charnière qui connecte la partie de couvercle 10b à la partie de fond 10a peut être perpendiculaire à la charnière 30 permettant de pivoter l'élément de verrouillage 3 et perpendiculaire à l'axe central Z. Tout polymère adapté, de préférence du type thermoplastique, peut permettre de former la pièce plastique.

Dans certaines options alternatives, l'élément de verrouillage 3 peut être une pièce conçue séparément, l'articulation pouvant alors être obtenue dans un état monté de cette pièce sur le réceptacle 10.

Egalement dans certains variantes, la partie de raccordement 4 et/ou la portion d'actionnement ici définie par la languette élastique 5 peuvent être rapportées sur la partie de boîtier 100 du réceptacle, par exemple par insertion/clippage de pattes longitudinalement saillantes dans des fentes prévue sur la partie de couvercle 10b ou autre type de connexion.

L'élément de verrouillage 3, ici pourvu de deux organes de blocage 14 et 15, est rabattu pour atteindre une première position, dans laquelle cet élément 3 est proche de la face externe 10c définie par le réceptacle 10. C'est depuis cette face 10c que fait saillie la partie de raccordement femelle 4. Ce rabattement, depuis sa position initiale obtenu lors du moulage du dispositif 1, est illustré par la flèche A sur la figure 1. On comprend que, dans la première position, l'élément de verrouillage 3 peut être inséré entre la partie de raccordement femelle 4 et la languette élastique 5 qui s'étend du même côté que la partie de raccordement 4 par rapport à la face externe 10c.

En référence à la figure 2B, l'un des deux bords opposés de la fente 11 peut être prolongé vers l'avant et être plus long que l'autre bord pour être plus proche, dans la première position, de l'extrémité 35 de pré-guidage. Ceci permet à ce bord plus long 11d de coopérer avec un organe de blocage 14, 15, à des fins de pré-guidage de l'extrémité de connexion 9. En effet, les ergots 9a, 9b doivent être pré-positionnés pour passer entre un organe de blocage 14, 15 et l'extrémité d'un bord long 11d, avant de pouvoir s'engager dans la fente 11 de façon ajustée.

On peut noter que les deux fentes 11 ici prévues dans la partie de raccordement femelle 4 sont diamétralement opposées et traversées par un plan virtuel incluant l'axe central Z et parallèle à l'axe X défini par la charnière 30. Selon cette disposition, il est avantageux de prévoir un bord biseauté BB pour l'accès à chaque fente 11, ce bord biseauté BB rejoignant un bord de la fente 11 qui est le bord plus court. Chaque bord biseauté BB dévie, depuis le bord court, vers un côté plus proche de la charnière 30. Avec cette disposition, on évite une interférence avec un organe de blocage 14, 15 qui peut être déplacé avec l'élément de verrouillage 3 jusque dans une position de fermeture du débouché axial 11b de la fente 11. L'organe de blocage 14, 15 est alors maintenu entre le bord long 11d et le bord biseauté BB, tant que l'élément de verrouillage 3 est retenu par la languette élastique 5 dans une configuration verrouillée.

La première position, illustrée sur les figures 2A-2B, 3 et 4, correspond à une position dans laquelle l'élément de verrouillage 3 est rabattu autour de la partie de raccordement femelle 4, tout en conservant une inclinaison générale par rapport à l'axe central Z. La première position est obtenue lorsque l'élément de verrouillage 3 est engagé contre un organe de retenue, de préférence un relief saillant 50, formé sur le réceptacle 10 à l'extérieur de la partie de raccordement femelle 4. Cet organe de retenue est ici défini dans la languette élastique 5. L'engagement en butée contre cet organe de retenue permet d'arrêter, sans la bloquer, la rotation de l'élément de verrouillage 3 en raison d'une augmentation du frottement, de sorte que l'élément de verrouillage 3 se situe dans une position angulaire prédéfinie, correspondant à la première position, dans laquelle la charnière 30 n'est pas à l'état complètement replié. Ici, par rapport à une deuxième position correspondant à l'état replié au maximum de la charnière 30 (deuxième position visible sur les figures 5 à 7B), il reste encore une différence, ici de 15° environ, avant d'atteindre cet état complètement replié. Du fait de cette différence, le ou les organes de blocage 14, 15 sont plus éloignés de la cavité C10 que dans la deuxième position, de sorte que chaque fente 11 reste accessible dans la première position. L'angle de 15° est donné à titre d'exemple non limitatif, sachant qu'on peut préférer réduire cet angle à moins de 20 ou 30° afin de limiter la course de l'élément de verrouillage 3 pour atteindre la deuxième position depuis la première position prédéfinie.

En revanche, comme illustré sur la figure 5 dans la deuxième position, chaque organe de blocage 14, 15 est suffisamment proche de la fente correspondante 11 pour interférer avec le débouché axial 11b et s'opposer au retrait de l'extrémité d'accouplement 9, par blocage dans les fentes 11 des ergots 9a, 9b. La deuxième position est obtenue par un effort de poussée exercé de façon axiale en direction de la cavité C10, sur l'extrémité 35 de l'élément de verrouillage 3. Le ou les organes de blocage 14, 15, ici sous la forme de deux organes diamétralement opposés, empêchent alors le retrait du guide de lumière 7 déjà inséré, car la deuxième position de l'élément de verrouillage 3 est une position clippée.

Il y a, dans cet exemple, une décomposition en deux temps pour obtenir la deuxième position depuis la position initiale montrée sur la figure 1 :

- d'abord on fait pivoter l'élément de verrouillage 3 pour entourer la partie de raccordement 4, ici avec une rotation de plus de 120° dans cette forme de réalisation non limitative en vue d'obtenir la première position qui autorise l'insertion du guide de lumière 7,
- puis après l'insertion du guide 7 on pousse complètement l'élément de verrouillage 3 contre la face externe 10c en finissant de plier la charnière 30.

L'insertion du guide de lumière 7 est réalisée de façon simple et directe, dans une portion de guidage longitudinal de la partie de raccordement 4. L'absence d'à-coup ou collision résulte d'une première indexation permise par des premiers moyens d'indexation en rotation (11, 11a) formés dans cette portion de guidage longitudinal, ici sous la forme de deux fentes 11 avec un fond 11a de butée. Chaque relief ou ergot 9a, 9b de l'extrémité de connexion 9 peut présenter des angles arrondis sur le bord frontal, ce qui facilite l'entrée dans la fente 11 correspondante.

L'utilisation de deux organes de blocage 14, 15 est ici préférée afin de mieux réaliser en amont de l'ouverture 4c une fonction d'indexation en rotation. Le ou les organes de blocage 14, 15 forment ainsi un deuxième moyen d'indexation en rotation, ici placé en regard de l'ouverture 4c et longitudinalement décalé vers l'extérieur par rapport à cette ouverture 4c dans la première position.

Une fois l'extrémité de connexion insérée 9 et engagée contre le fond 11a des fentes 11, le verrouillage de la deuxième position résulte de l'action de clippage entre l'élément de verrouillage 3 et une portion actionnable du réceptacle 10, typiquement réalisée sous la forme d'une languette élastique 5 qui s'étend parallèlement à la partie de raccordement 4. Une zone d'espacement E est alors prévue entre la partie de raccordement 4 et la languette élastique 5 pour permettre de pousser l'élément de verrouillage 3 plus loin que la première position. Comme illustré sur la figure 7B, le verrouillage mécanique résulte de l'insertion d'un bord 19 de l'élément de verrouillage 3 dans l'espacement E et du franchissement par une partie 26 de l'élément de verrouillage 3 (franchissement avec contact de frottement) d'un relief saillant 50 prévu sur la languette élastique 5 ou portion actionnable comparable. Le relief saillant 50 fait ici saillie vers la partie de raccordement femelle 4 depuis une face de la languette élastique 5.

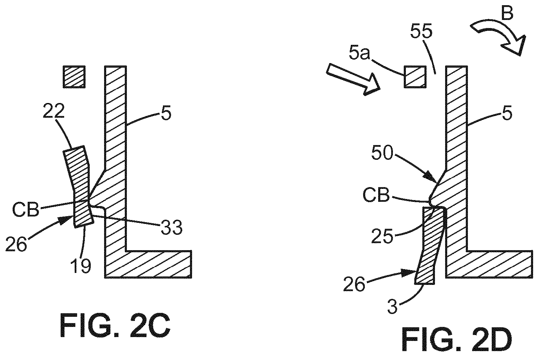

Près de la charnière 30 et/ou dans d'autres zones autour de la partie de raccordement 4, l'élément de verrouillage 3 peut s'appuyer par une base 24 contre la face 10c du réceptacle 10. L'élément de verrouillage 3 peut en outre présenter un rebord ou bord de prise 22, orienté de façon opposée à la base 24 et sur lequel peut s'engager une surface de butée axiale 25 définie par le relief saillant 50, seulement lorsque l'élément de verrouillage 3 a été poussé complètement dans la deuxième position. Ce bord de prise 22 est formé sur la partie 26 qui franchit le relief saillant 50. Autrement dit, dans la deuxième position, la partie 26 de l'élément de verrouillage 3 est coincée entre la face externe 10c du côté de sa base 24 et la surface de butée axiale 25, ce qui est bien illustré notamment sur les figures 2D et 7B.

Dans un mode de réalisation préféré, l'élément de verrouillage 3 n'ajoute pas d'encombrement suivant la direction longitudinale dans la deuxième position. La languette élastique 5 peut faire saillie plus loin que la partie de raccordement 4 pour faciliter l'accès à une extrémité d'actionnement 5a.

La surface d'indexation 33 montrée sur la figure 2C présente une courbure concave qui permet d'augmenter le frottement contre le relief saillant 50 au fur et à mesure qu'on se rapproche d'un pliage complet de la charnière 30. A la fin de cette poussée axiale, exercée alors que le guide de lumière 7 a été inséré complètement dans le logement d'accouplement L, on obtient le verrouillage de la deuxième position avec l'engagement du bord de prise 22 contre la surface de butée axiale 25 du relief saillant 50.

Plus généralement, l'élément de verrouillage 3 peut présenter tout type de moyens de solidarisation amovible afin d'entrer en relation bloquée sur le réceptacle 10, de façon amovible dans la deuxième position. De tels moyens de solidarisation amovible s'engagent sur le réceptacle 10 à distance du logement d'accouplement L, et définissent pour cela une surface de butée.

Bien que la surface de butée est illustrée sous la forme d'un bord de prise 22 non saillant sur les figures (voir en particulier les figures 2B, 2C, 2D et 7B), et placé ici en arrière de la surface d'indexation 33 et donc plus éloigné du bord 19, on comprend que la localisation et la forme de la surface de butée peut varier. A titre d'exemple de variante (non représentée), les moyens de solidarisation amovible peuvent être réalisés sous la forme d'une patte déformable saillante vers l'extérieur ou formant une extrémité libre de l'élément de verrouillage 3, qui s'engage au travers d'une fenêtre définie dans un élément d'ancrage du réceptacle 10 dans la deuxième position. La patte définit alors, comme dans le cas du rebord ou bord de prise 22, une surface de butée orientée à l'opposé de la cavité C10, butant contre un bord supérieur de la fenêtre. Un appui sur une extrémité de la patte qui fait saillie de la fenêtre peut permettre de déformer suffisamment la patte pour permettre le désengagement hors de la fenêtre et ainsi déverrouiller la deuxième position.

L'obtention de la première position peut être obtenue dans ce cas par l'engagement de la patte dans une rainure de faible profondeur formée plus haut que la fenêtre dans l'élément d'ancrage, ce qui permet de retenir l'élément de verrouillage 3.

Des exemples de déverrouillage de la deuxième position, par utilisation de la languette élastique 5 ou portion actionnable analogue, vont être à présent décrits en référence aux figures 2D et 5 à 7B.

En référence à la figure 2D, la languette élastique 5 peut être fléchie via une action de poussée (flèche B) sur une extrémité d'actionnement 5a ou autre zone adaptée d'appui de cette languette élastique 5 pour déverrouiller la deuxième position. La rainure ou fente 55 prévue dans l'extrémité d'actionnement 5a de la languette élastique 5 peut permettre à ongle ou à un bout du doigt de l'opérateur d'engager et repousser la languette élastique vers le côté opposé à la partie de raccordement 4. Cette option permet de limiter l'espacement E, tout en ayant un accès direct à une zone de prise de l'extrémité d'actionnement 5a.

Bien entendu, l'extrémité d'actionnement 5a peut être réalisée différemment selon les possibilités d'intégration du dispositif de raccordement. En outre, dans des variantes, il peut être prévu d'actionner différemment le retrait du relief saillant 50, par exemple par une action dans une zone distante, par un basculement ou une translation linéaire.

Dans une variante, une attraction magnétique peut aussi être prévue, par utilisation d'une petite pièce en matériau ferromagnétique ou d'une couche composite (incluant des particules ferromagnétiques) formant partie de l'élément de verrouillage 3. L'attraction magnétique dans la première position et/ou dans la deuxième position peut permettre de maintenir convenablement l'élément de verrouillage 3 dans une configuration pliée souhaitée. On comprend qu'on peut quitter la première position et atteindre la deuxième position par poussée axiale sur l'élément de verrouillage 3, tandis que la deuxième position peut être déverrouillée par le déplacement de l'organe magnétique formé sur la languette élastique 5 ou autre portion actionnable.

Le déverrouillage de la deuxième position, déclenche de préférence un retour automatique à la première position, par l'effet de rappel élastique exercée par la charnière 30. La partie 26 de l'élément de verrouillage 3 se déplace de la deuxième position montrée sur la figure 2D à la première position montrée sur la figure 2C. On retrouve typiquement cette première position qui autorise le retrait du guide 7, en raison du frottement de la surface d'indexation 33 contre la butée CB de contact radial définie par le relief saillant 50.

L'élément de verrouillage 3 peut, le cas échéant, présenter au moins un rebord latéral 38 qui fournit une prise pour exercer une force de traction sur l'élément de verrouillage 3. Une action de traction par le rebord 38, combinée à une légère flexion de la languette élastique 5, permet de désengager la partie 26 sans devoir trop déplacer le relief saillant 50. Cette disposition peut contribuer à éviter de plier excessivement la languette élastique 5 pour obtenir un retour vers la première position, sans supprimer complètement le contact de frottement du relief saillant 50 contre la partie 26.

Quelques avantages de la présente invention dans ses modes de réalisation vont être ci-après mentionnés.

Un dispositif 1 de raccordement amovible peut être conçu en une seule pièce PP, ce qui le rend économique à fabriquer, sans organe d'actionnement additionnel. Il présente une ergonomie pour l'opérateur devant réaliser le montage et le démontage du guide de lumière. Il est permis de passer de la première position à la deuxième position sans outil et avec un faible débattement, ce qui limite la fatigue de la charnière 30.

Le recours à un clippage permet de s'assurer avec certitude que l'on a obtenu le verrouillage. De plus, la solution est particulièrement compacte puisqu'on occupe un espace proche du volume déjà occupé par la partie de raccordement femelle 4.

En référence aux figures 2B et 6, il est permis de réaliser un module de transmission optique M qui permet de multiples démontages de façon aisée et robuste. Le guide de lumière 7 peut servir dans un véhicule, notamment un véhicule automobile, en étant monté intérieurement dans des éléments peu épais du véhicule, par exemple une portière, des panneaux d'habillage intérieur ou des éléments d'un tableau de bord. Le guide de lumière 7 peut être réalisé en partie sous la forme de tige conductrice de lumière pourvue d'une extrémité d'accouplement 9 qui peut être simple de conception, sans requérir des pièces métalliques additionnelles pour la connexion.

L'invention n'est nullement limitée aux modes de réalisation décrits et illustrés qui n'ont été donnés qu'à titre d'exemples. Il doit être évident pour les personnes versées dans l'art que la présente invention permet des modes de réalisation sous de nombreuses autres formes spécifiques sans l'éloigner du domaine d'application de l'invention comme revendiqué.

Ainsi, bien que les dessins montrent le cas d'un clip ou relief 50 saillant sur la languette élastique 5, coopérant avec une cavité ou surface 33 en creux formé sur la partie 26, on comprend que cette disposition peut être inversée, avec un organe saillant du côté de de la partie 26 de l'élément de verrouillage 3 et un creusement du côté de la languette 5.

Par ailleurs, toute autre forme de clippage est permise entre l'élément de verrouillage 3 et le réceptacle 10, la languette 5 pouvant par exemple être remplacée par un trou dans le réceptacle 10.

## Revendications

1. Dispositif (1) de raccordement amovible pour un guide de lumière (7), comprenant :

   - un réceptacle (10) définissant une cavité (C10) pour une source lumineuse (2), le réceptacle (10) comprenant une partie de raccordement femelle (4) qui :

     - délimite un logement d'accouplement (L) communiquant avec la cavité (C10) ;
     - présente une ouverture (4c), permettant l'insertion et l'extraction d'un guide de lumière (7) dans le logement d'accouplement (L), respectivement par insertion et extraction d'une extrémité (9) du guide de lumière (7) au travers de l'ouverture (4c) suivant une direction longitudinale ;

     - un élément de verrouillage (3) articulé par rapport au réceptacle (10) et pourvu d'au moins un organe de blocage (14, 15), l'élément de verrouillage (3) étant mobile en rotation entre une première position, permettant d'insérer le guide de lumière (7) dans le logement d'accouplement (L) et une deuxième position dans laquelle ledit organe de blocage (14, 15) est apte à empêcher un retrait du guide de lumière (7) déjà inséré,

     le dispositif de raccordement comprenant un élément électroluminescent placé dans la cavité (C10) du réceptacle (10) pour former tout ou partie de la source lumineuse de lumière et ayant une direction générale d'éclairage parallèle ou confondue avec un axe longitudinal de la partie de raccordement femelle (4)
     - articulé autour d'un axe (X) défini par une charnière (30) de raccordement entre l'élément de verrouillage (3) et le réceptacle (10) ;
     - adapté pour venir buter sur le réceptacle (10) dans ladite première position en ayant une position angulaire prédéfinie dans laquelle l'organe de blocage (14, 15) est davantage éloigné de la cavité (C10) que dans ladite deuxième position.

2. Dispositif de raccordement amovible selon la revendication 1, dans lequel le réceptacle (10) présente, extérieurement à la partie de raccordement femelle (4), une butée (CB) de contact radial sur laquelle vient s'appuyer, dans la première position de l'élément de verrouillage (3), une surface d'indexation (33) portée par ou formée sur l'élément de verrouillage (3), de façon à limiter en dessous d'un seuil déterminé inférieur à 50°, de préférence inférieur à 30°, une rotation de l'élément de verrouillage (3) autour de l'axe (X) entre ladite première position et ladite deuxième position.

3. Dispositif de raccordement amovible selon l'un des revendications précédentes, dans lequel la deuxième position est verrouillée mécaniquement par le franchissement par l'élément de verrouillage (3), dans une première direction allant vers la cavité (C10), d'un relief saillant (50) prévu sur une portion actionnable du réceptacle (10), le relief saillant (50) étant adapté pour bloquer axialement l'élément de verrouillage (3) dans la deuxième position.

4. Dispositif de raccordement amovible selon la revendication 2 et la revendication 3, dans lequel la portion actionnable du réceptacle (10) comporte ou est définie par une languette élastique (5) de clippage qui s'étend parallèlement à la direction longitudinale et présente ledit relief saillant (50) sur une face orientée vers la partie de raccordement femelle (4), le relief saillant (50) ayant un sommet convexe adapté pour s'engager sur la surface d'indexation (33), qui est de préférence concave, afin de former la butée (CB) de contact radial dans la première position et limiter la rotation de l'élément de verrouillage (3).

5. Dispositif de raccordement amovible selon la revendication 3 ou 4, dans lequel une charnière (30) permettant de faire tourner l'élément de verrouillage (3) est à effet de rappel élastique afin de solliciter automatiquement l'élément de verrouillage (3) au moins vers la première position, depuis la deuxième position en réponse à une action de déverrouillage exercée sur la portion actionnable.

6. Dispositif de raccordement amovible selon l'une quelconque des revendications précédentes, dans lequel l'élément de verrouillage (3) présente en outre des moyens de solidarisation amovible (26, 22) pour entrer en relation bloquée sur le réceptacle (10) de façon amovible dans ladite deuxième position, les moyens de solidarisation amovible (26, 22) s'engageant sur le réceptacle (10) à distance du logement d'accouplement (L).

7. Dispositif de raccordement amovible selon la revendication 6, dans lequel les moyens de solidarisation amovible (26, 22) comprennent une surface de butée (22) orientée à l'opposé de la cavité (C10) du réceptacle (10) dans la deuxième position de l'élément de verrouillage (3),

et dans lequel le réceptacle (10) comporte une languette élastique (5) de clippage s'engageant contre la surface de butée (22) dans la deuxième position de l'élément de verrouillage (3).

8. Dispositif de raccordement amovible selon l'une quelconque des revendications précédentes, dans lequel l'élément de verrouillage (3) s'étend de façon annulaire autour de la partie de raccordement femelle (4) aussi bien dans la première position que dans la deuxième position.

9. Dispositif de raccordement amovible selon la revendication 8, dans lequel la partie de raccordement femelle (4) présente une fente longitudinale (11) parallèle à un axe central (Z) de la partie de raccordement femelle, destinée à recevoir un relief saillant (9a, 9b) formé sur le guide de lumière (7), la fente longitudinale (11) présentant un fond (11a) proximal par rapport à la cavité (C10) et deux bords opposés qui s'étendent depuis le fond (11a) jusqu'à un débouché axial (11b) de la fente (11),
et dans lequel l'organe de blocage (14, 15), qui forme une projection en saillie radialement vers l'intérieur depuis une face interne (13) de l'élément de verrouillage (3), est aligné longitudinalement avec la fente (11) dans la deuxième position en faisant face au fond (11a) de la fente, l'organe de blocage (14, 15) étant escamoté du côté de l'un des deux bords opposés dans la première position.

10. Dispositif de raccordement amovible selon l'une quelconque des revendications précédentes, dans lequel l'élément de verrouillage (3) et le réceptacle (10) sont reliés entre eux par une charnière (30) élastique intégrée dans une pièce plastique (PP), l'élément de verrouillage (3) et tout ou partie du réceptacle (10) appartenant à ladite pièce plastique (PP).

11. Dispositif de raccordement amovible selon l'une quelconque des revendications précédentes, dans lequel l'élément de verrouillage (3) s'étend extérieurement au réceptacle (10).

12. Dispositif de raccordement amovible selon l'une quelconque des revendications précédentes, dans lequel la partie de raccordement femelle (4) s'étend longitudinalement autour d'un axe central (Z) et comprend :

 - une portion de guidage longitudinal pour le guide de lumière (7) ; et
 - des premiers moyens d'indexation en rotation (11, 11a) formés dans la portion de guidage longitudinal, adaptés pour coopérer avec un relief (9a, 9b) formé sur le guide de lumière (7).

**13.** Dispositif de raccordement amovible selon la revendication 12, dans lequel l'organe de blocage (14 15) définit un deuxième moyen d'indexation en rotation, qui est placé en regard de l'ouverture (4c) et longitudinalement décalé vers l'extérieur par rapport à l'ouverture (4c) dans ladite première position.

**14.** Module (M) à transmission optique, comprenant le dispositif (1) de raccordement amovible selon l'une quelconque des revendications précédentes et un guide de lumière (7) réalisé au moins en partie sous la forme de tige conductrice de lumière pourvue d'une extrémité d'accouplement (9), une position connectée de l'extrémité d'accouplement (9) dans le logement d'accouplement (L) étant verrouillée par l'organe de blocage (14, 15) dans la deuxième position et déverrouillée dans la première position pour laquelle l'organe de blocage (14, 15) est davantage éloigné de la cavité (C10) que dans ladite deuxième position.

**15.** Utilisation d'un dispositif (1) de raccordement amovible selon l'une quelconque des revendications 1 à 11, dans laquelle le dispositif (1) de raccordement amovible est monté dans un véhicule automobile pour recevoir un guide optique (7) du type pourvu d'un relief saillant (9a, 9b) formé latéralement sur une extrémité d'accouplement (9) du guide optique, ledit organe de blocage (14, 15) étant rabattu sur le relief saillant (9a, 9b) dans la deuxième position de l'élément de verrouillage (3).

**Patentansprüche**

**1.** Lösbare Anschlussvorrichtung (1) für einen Lichtleiter (7), beinhaltend:

- einen Behälter (10), der einen Hohlraum (C10) für eine Lichtquelle (2) definiert, wobei der Behälter (10) einen aufnehmenden Anschlussteil (4) beinhaltet, der:
- eine Kopplungsaufnahme (L) begrenzt, die mit dem Hohlraum (C10) kommuniziert;
- eine Öffnung (4c) aufweist, die das Einführen und das Herausziehen eines Lichtleiters (7) in der Kopplungsaufnahme (L) durch das Einführen bzw. das Herausziehen eines Endes (9) des Lichtleiters (7) durch die Öffnung (4c) gemäß einer Längsrichtung gestattet;
- ein Verriegelungselement (3), das in Bezug auf den Behälter (10) schwenkbar ist und über mindestens ein Blockierorgan (14, 15) verfügt, wobei das Verriegelungselement (3) zwischen einer ersten Position, die das Einführen des Lichtleiters (7) in die Kopplungsaufnahme (L) gestattet, und einer zweiten Position, in der das Blockierorgan (14, 15) dazu fähig ist, ein Entfernen des bereits eingeführten Lichtleiters (7) zu verhindern, drehbeweglich ist, wobei die Anschlussvorrichtung ein Elektrolumineszenzelement beinhaltet, das in dem Hohlraum (C10) des Behälters (10) platziert ist, um die gesamte oder einen Teil der Lichtquelle zu bilden, und eine allgemeine Beleuchtungsrichtung aufweist, die zu einer Längsachse des aufnehmenden Anschlussteils (4) parallel ist oder mit dieser zusammenfällt,
- das um eine Achse (X) schwenkbar ist, die durch ein Anschlussscharnier (30) zwischen dem Verriegelungselement (3) und dem Behälter (10) definiert wird;
- das dazu angepasst ist, in der ersten Position an dem Behälter (10) zur Anlage zu kommen und dabei eine vordefinierte Winkelposition aufzuweisen, in der das Blockierorgan (14, 15) weiter von dem Hohlraum (C10) beabstandet ist als in der zweiten Position.

**2.** Lösbare Anschlussvorrichtung nach Anspruch 1, wobei der Behälter (10) außerhalb des aufnehmenden Anschlussteils (4) einen radialen Kontaktanschlag (CB) aufweist, an dem in der ersten Position des Verriegelungselements (3) eine Indexierungsoberfläche (33) zur Anlage kommt, die durch das Verriegelungselement (3) getragen wird oder an diesem gebildet ist, um eine Drehung des Verriegelungselements (3) um die Achse (X) zwischen der ersten Position und der zweiten Position auf unter einen bestimmten Schwellenwert kleiner als 50°, vorzugsweise kleiner als 30°, zu begrenzen.

**3.** Lösbare Anschlussvorrichtung nach einem der vorhergehenden Ansprüche, wobei die zweite Position dadurch mechanisch verriegelt wird, dass das Verriegelungselement (3) in einer ersten Richtung, die zu dem Hohlraum (C10) führt, ein vorstehendes Relief (50) passiert, das an einem betätigbaren Abschnitt des Behälters (10) vorgesehen ist, wobei das vorstehende Relief (50) dazu angepasst ist, das Verriegelungselement (3) in der zweiten Position axial zu blockieren.

**4.** Lösbare Anschlussvorrichtung nach Anspruch 2 und Anspruch 3, wobei der betätigbare Abschnitt des Behälters (10) eine clipsbare Federzunge (5) umfasst oder durch diese definiert wird, die sich parallel zu der Längsrichtung erstreckt und das vorstehende Relief (50) an einer zu dem aufnehmenden Anschlussteil (4) gerichteten Fläche aufweist, wobei das vorstehende Relief (50) eine konvexe Spitze aufweist, die dazu angepasst ist, in die Indexierungsoberfläche (33), die vorzugsweise konkav ist, einzugreifen, um den radialen Kontaktanschlag (CB) in der ersten Position zu bilden und die Drehung des Verriegelungselements (3) zu begrenzen.

**5.** Lösbare Anschlussvorrichtung nach Anspruch 3 oder 4, wobei ein Scharnier (30), welches das Drehen des Verriegelungselements (3) gestattet, elastisch rückstellend ist, um das Verriegelungselement (3) als Reaktion auf einen Entriegelungsvorgang, der an dem betätigbaren Abschnitt ausgeübt wird, von der zweiten Position automatisch mindestens in die erste Position zu drängen.

**6.** Lösbare Anschlussvorrichtung nach einem der vorhergehenden Ansprüche, wobei das Verriegelungselement (3) ferner Mittel zum lösbaren Befestigen (26, 22) aufweist, um in der zweiten Position lösbar an dem Behälter (10) blockiert zu werden, wobei die Mittel zur lösbaren Befestigung (26, 22) in einem Abstand von der Kopplungsaufnahme (L) in den Behälter (10) eingreifen.

**7.** Lösbare Anschlussvorrichtung nach Anspruch 6, wobei die Mittel zur lösbaren Befestigung (26, 22) eine Anschlagoberfläche (22) beinhalten, die in der zweiten Position des Verriegelungselements (3) entgegengesetzt zu dem Hohlraum (C10) des Behälters (10) angeordnet ist, und wobei der Behälter (10) eine clipsbare Federzunge (5) umfasst, die in der zweiten Position des Verriegelungselements (3) an der Anschlagoberfläche (22) zum Eingriff kommt.

**8.** Lösbare Anschlussvorrichtung nach einem der vorhergehenden Ansprüche, wobei sich das Verriegelungselement (3) sowohl in der ersten Position als auch in der zweiten Position ringförmig um den aufnehmenden Anschlussteil (4) erstreckt.

**9.** Lösbare Anschlussvorrichtung nach Anspruch 8, wobei das aufnehmende Anschlussteil (4) einen Längsschlitz (11) parallel zu einer Mittelachse (Z) des aufnehmenden Anschlussteils aufweist, der dazu bestimmt ist, ein vorstehendes Relief (9a, 9b), das an dem Lichtleiter (7) gebildet ist, aufzunehmen, wobei der Längsschlitz (11) einen Boden (11a) proximal zu dem Hohlraum (C10) und zwei gegenüberliegende Ränder, die sich von dem Boden (11a) bis zu einer axialen Mündung (11b) des Schlitzes (11) erstrecken, aufweist, und wobei das Blockierorgan (14, 15), das einen von einer Innenfläche (13) des Verriegelungselements (3) radial nach innen vorstehenden Vorsprung bildet, in der zweiten Position in Längsrichtung nach dem Schlitz (11) ausgerichtet ist und dabei dem Boden (11a) des Schlitzes zugewandt ist, wobei das Blockierorgan (14, 15) in der ersten Position auf der Seite von einem der gegenüberliegenden Ränder untergebracht ist.

**10.** Lösbare Anschlussvorrichtung nach einem der vorhergehenden Ansprüche, wobei das Verriegelungselement (3) und der Behälter (10) untereinander durch ein Federscharnier (30) verbunden sind, das in ein Kunststoffteil (PP) integriert ist, wobei das Verriegelungselement (3) und der gesamte oder ein Teil des Behälters (10) zu dem Kunststoffteil (PP) gehören.

**11.** Lösbare Anschlussvorrichtung nach einem der vorhergehenden Ansprüche, wobei sich das Verriegelungselement (3) außerhalb des Behälters (10) erstreckt.

**12.** Lösbare Anschlussvorrichtung nach einem der vorhergehenden Ansprüche, wobei sich der aufnehmende Anschlussteil (4) in Längsrichtung um eine Mittelachse (Z) erstreckt und Folgendes beinhaltet:

- einen Längsführungsabschnitt für den Lichtleiter (7); und
- erste Drehindexierungsmittel (11, 11a), die in dem Längsführungsabschnitt gebildet sind und dazu angepasst sind, mit einem Relief (9a, 9b) zusammenzuwirken, das an dem Lichtleiter (7) gebildet ist.

**13.** Lösbare Anschlussvorrichtung nach Anspruch 12, wobei das Blockierorgan (14, 15) ein zweites Drehindexierungsmittel definiert, das in der ersten Position gegenüber der Öffnung (4c) und in Bezug auf die Öffnung (4c) in Längsrichtung nach außen versetzt platziert ist.

**14.** Optisches Übertragungsmodul (M), beinhaltend die lösbare Anschlussvorrichtung (1) nach einem der vorhergehenden Ansprüche und einen Lichtleiter (7), der mindestens teilweise in Form eines lichtleitenden Stabs ausgeführt ist, der über ein Kopplungsende (9) verfügt, wobei eine verbundene Position des Kopplungsendes (9) in der Kopplungsaufnahme (L) durch das Blockierorgan (14, 15) in der zweiten Position verriegelt wird und in der ersten Position entriegelt wird, in der das Blockierorgan (14, 15) weiter von dem Hohlraum (C10) beabstandet ist als in der zweiten Position.

**15.** Verwendung einer lösbaren Anschlussvorrichtung (1) nach einem der Ansprüche 1 bis 11, wobei die lösbare Anschlussvorrichtung (1) in einem Kraftfahrzeug montiert ist, um einen optischen Leiter (7) des Typs, der über ein vorstehendes Relief (9a, 9b), das seitlich an einem Kopplungsende (9) des optischen Leiters gebildet ist, verfügt, aufzunehmen, wobei das Blockierorgan (14, 15) in der zweiten Position des Verriegelungselements (3) auf das vorstehende Relief (9a, 9b) geklappt ist.

## Claims

1. Removable connection device (1) for a light guide (7), comprising:

   - a receptacle (10) defining a cavity (C10) for a light source (2), the receptacle (10) comprising a female connection part (4) that:
   - delimits a coupling housing (L) that communicates with the cavity (C10);
   - has an opening (4c), which allows the insertion and extraction of a light guide (7) in the coupling housing (L), respectively by inserting and extracting an end (9) of the light guide (7) through the opening (4c) in a longitudinal direction;
   - a locking element (3) that is articulated with respect to the receptacle (10) and provided with at least one blocking member (14, 15), the locking element (3) being able to move in rotation between a first position, which makes it possible to insert the light guide (7) in the coupling housing (L), and a second position in which said blocking member (14, 15) is able to prevent withdrawal of the light guide (7) already inserted, the connection device comprising an electroluminescent element that is placed in the cavity (C10) of the receptacle (10) so as to form all or part of the light source and having a general direction of illumination parallel to or coincident with a longitudinal axis of the female connection part (4)
   - articulated about an axis (X) defined by a hinge (30) for connection between the locking element (3) and the receptacle (10) ;
   - designed to come to abut against the receptacle (10) in said first position, having a predefined angular position in which the blocking member (14, 15) is further away from the cavity (C10) than in said second position.

2. Removable connection device according to Claim 1, wherein the receptacle (10) has, on the outside of the female connection part (4), a stop (CB) for radial contact on which comes to bear, in the first position of the locking element (3), an indexing surface (33) borne by or formed on the locking element (3), so as to limit to below a determined threshold of less than 50°, preferably less than 30°, rotation of the locking element (3) about the axis (X) between said first position and said second position.

3. Removable connection device according to either of the preceding claims, wherein the second position is mechanically locked by the passing of the locking element (3), in a first direction going towards the cavity (C10), over a protruding relief (50) provided on an actuatable portion of the receptacle (10), the protruding relief (50) being designed to axially block the locking element (3) in the second position.

4. Removable connection device according to Claim 2 and Claim 3, wherein the actuatable portion of the receptacle (10) has or is defined by an elastic clip-fastening tongue (5) that extends parallel to the longitudinal direction and has said protruding relief (50) on a face oriented towards the female connection part (4), the protruding relief (50) having a convex apex designed to engage on the indexing surface (33), which is preferably concave, in order to form the stop (CB) for radial contact in the first position and limit the rotation of the locking element (3).

5. Removable connection device according to Claim 3 or 4, wherein a hinge (30) that makes it possible to rotate the locking element (3) has an elastic return effect in order to automatically urge the locking element (3) at least towards the first position, from the second position in response to an unlocking action exerted on the actuatable portion.

6. Removable connection device according to any one of the preceding claims, wherein the locking element (3) also has removable securing means (26, 22) so as to be in blocked connection on the receptacle (10) in a removable manner in said second position, the removable securing means (26, 22) engaging on the receptacle (10) at a distance from the coupling housing (L) .

7. Removable connection device according to Claim 6, wherein the removable securing means (26, 22) comprise a stop surface (22) oriented away from the cavity (C10) of the receptacle (10) in the second position of the locking element (3), and wherein the receptacle (10) has an elastic clip-fastening tongue (5) engaging against the stop surface (22) in the second position of the locking element (3).

8. Removable connection device according to any one of the preceding claims, wherein the locking element (3) extends in an annular manner around the female connection part (4) both in the first position and in the second position.

9. Removable connection device according to Claim 8, wherein the female connection part (4) has a longitudinal slot (11) parallel to a central axis (Z) of the female connection part, intended to receive a protruding relief (9a, 9b) formed on the light guide (7), the longitudinal slot (11) having a bottom (11a) that is proximal with respect to the cavity (C10) and two opposite edges that extend from the bottom (11a) as far as an axial mouth (11b) of the slot (11), and wherein the blocking member (14, 15), which forms a projection protruding radially towards the inside from an internal face (13) of the locking element (3), is aligned longitudinally with the slot (11) in the second position, facing the bottom (11a) of the slot, the blocking member (14, 15) being stowed on the side of one of the two opposite edges in the first position.

10. Removable connection device according to any one of the preceding claims, wherein the locking element (3) and the receptacle (10) are connected to each other by an elastic hinge (30) integrated in a plastic piece (PP), the locking element (3) and all or part of the receptacle (10) belonging to said plastic piece (PP).

11. Removable connection device according to any one of the preceding claims, wherein the locking element (3) extends on the outside of the receptacle (10).

12. Removable connection device according to any one of the preceding claims, wherein the female connection part (4) extends longitudinally about a central axis (Z) and comprises:

- a longitudinal guiding portion for the light guide (7); and
- first rotational indexing means (11, 11a) formed in the longitudinal guiding portion, which are designed to cooperate with a relief (9a, 9b) formed on the light guide (7).

13. Removable connection device according to Claim 12, wherein the blocking member (14, 15) defines a second rotational indexing means, which is placed facing the opening (4c) and longitudinally offset towards the outside with respect to the opening (4c) in said first position.

14. Optical transmission module (M), comprising the removable connection device (1) according to any one of the preceding claims and a light guide (7) realized at least in part in the form of a light conducting rod provided with a coupling end (9), a position in which the coupling end (9) is connected in the coupling housing (L) being locked by the blocking member (14, 15) in the second position and unlocked in the first position for which the blocking member (14, 15) is further away from the cavity (C10) than in said second position.

15. Use of a removable connection device (1) according to any one of Claims 1 to 11, wherein the removable connection device (1) is mounted in an automotive vehicle so as to receive an optical guide (7) of the type provided with a protruding relief (9a, 9b) formed laterally on a coupling end (9) of the optical guide, said blocking member (14, 15) being folded down over the protruding relief (9a, 9b) in the second position of the locking element (3).

**FIG. 1**

**FIG. 2A**

**FIG. 2B**

**FIG. 2C**

**FIG. 2D**

FIG. 3

FIG. 4

FIG. 5

FIG. 6

FIG. 7A

FIG. 7B

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5732176 A
- EP 1482340 A2